# EUROPÄISCHE PATENTSCHRIFT

(11) **EP 2 317 278 B1**
(45) Veröffentlichungstag und Bekanntmachung des Hinweises auf die Patenterteilung: **11.11.2015**
(21) Anmeldenummer: 10175347.3
(22) Anmeldetag: 06.09.2010
(51) Int. Cl.: G01B 5/12, G01B 21/04, G01B 5/012, H04Q 9/00

(54) **Tastsystem und Verfahren zum Betrieb eines Tastsystems mit drahtloser Datenübertragung**
Sensor system and method for operating a sensor system with wireless datatransfer
Système de palpage et procédé destiné au fonctionnement d'un système de palpage avec transmission de données sans fil

(30) Priorität: 28.10.2009 DE 102009046071; 03.09.2010 DE 102010040195
(43) Veröffentlichungstag der Anmeldung: 04.05.2011
(73) Patentinhaber: Dr. Johannes Heidenhain GmbH, 83301 Traunreut (DE)
(72) Erfinder: Gröll, Klaus, 83329, Waging am See (DE)

(56) Entgegenhaltungen:
- EP-A1- 0 872 787
- EP-A2- 1 926 071
- WO-A1-2009/027430
- DE-A1-102006 050 040
- US-B2- 7 395 182

## Beschreibung

Die Erfindung betrifft ein Tastsystem, bestehend aus einem Tastkopf mit einem Taststift und einem Sende-Empfängerelement, wobei zwischen Tastkopf und dem Sende-Empfängerelement eine drahtlose Informationsübertragung möglich ist, gemäß dem Oberbegriff des Anspruchs 1. Ferner betrifft die Erfindung ein Verfahren zum Betrieb eines derartigen Tastsystems gemäß dem Anspruch 9.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Signal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Infrarot-Signal umgewandelt, so dass auf diese Weise eine berührungs- und drahtlose Signalübertragung an das Sende-Empfängerelement des Tastsystems erreicht wird.

In diesem Sende-Empfängerelement werden dann die drahtlos übertragenen Signale wieder in elektrische Signale umgewandelt. Das Sende-Empfängerelement des Tastsystems ist mit einer Auswerteeinheit verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden.

Mit einem entsprechenden Tastkopf kann also beispielsweise die Kontur eines Werkstücks aber auch die Kontur eines Werkzeugs abgetastet werden. Im Falle der Abtastung eines Werkstücks ist der Tastkopf meist beweglich relativ zum Sende-Empfängerelement angeordnet und im Falle einer Abtastung eines Werkzeugs ist der Tastkopf meist stationär relativ zum Sende-Empfängerelement montiert.

Aus der Offenlegungsschrift WO 2007/028964 A1 ist ein Tastsystem der eingangs genannten Art bekannt, bei dem eine drahtlose Signalübertragung alternativ mit Infrarot-Licht oder Funk offenbart ist.

In der Offenlegungsschrift EP 0 872 787 A1 ist ein programmierbares Tastsystem beschrieben, welches so konfiguriert ist, dass im Messbetrieb eine Signalübertragung zwischen einem Tastkopf und einem Interface über Funksignale erfolgt. Zudem ist eine optische Signalübertragung vorgesehen um Information außerhalb des Messbetriebs, insbesondere bevor die Parameter zur Funkübertragung programmiert sind, zu senden.

Die Patentschrift US 7 395 182 B2 offenbart ein Tastsystem, dessen Komponenten drahtlos Signale austauschen können. Es wird dort auch die Möglichkeit angegeben gemischte Systeme einzusetzen, also die Möglichkeit optische Signale (z. B. zum Einschalten des Tastkopfes) und Funksignale zu generieren.

Die Offenlegungsschrift EP 1 926 071 A2 der Anmelderin zeigt ein Tastsystem, bei dem zwischen dem Tastkopf und dem Sende-Empfängerelement eine drahtlose Kommunikation eingerichtet ist. Dabei sind ein Steuerbefehl und ein Schaltsignal auf zwei unterschiedlichen Übertragungskanälen übertragbar.

Aus der DE 10 2006 050 040 A1 ist ein energieautarker Druck- und Berührungssensor bekannt, der eine Signalübertragungseinrichtung aufweist, wobei dort unter anderem offenbart ist, dass die Signale optisch, akustisch oder induktiv auch in Kombination übertragbar sein können.

Schließlich ist aus der WO 2009 027 430 A1 ein Tastsystem bekannt, bei dem der Tastkopf und das Sende-Empfängerelement über Funkwellen kommunizieren. Zur Programmierung des Tastsystems kann eine optische Fernbedienung verwendet werden, die mit dem Sende-Empfängerelement drahtlos kommunizieren kann.

Der Erfindung liegt die Aufgabe zu Grunde, ein Tastsystem, bzw. ein Verfahren zum Betrieb eines Tastsystems zu schaffen, welches insgesamt für ein Erreichen einer hohen Messgenauigkeit geeignet ist. Zudem kann durch die Erfindung ein sicherer und einfacher Betrieb eines Tastsystems erreicht werden.

Diese Aufgabe wird erfindungsgemäß durch die Merkmale des Anspruchs 1 bzw. des Anspruchs 9 gelöst.

Demnach umfasst das Tastsystem einen Tastkopf, der einen Taststift und ein Sensorelement aufweist. Durch Berührung des Taststifts ist vom Sensorelement ein Sensorsignal erzeugbar, welches eine Antastinformation beinhaltet, so dass also das Sensorsignal als Träger der Antastinformation dient. Weiterhin umfasst das Tastsystem ein Sende-Empfängerelement. Der Tastkopf und das Sende-Empfängerelement sind derart konfiguriert, dass zwischen diesen eine drahtlose Informationsübertragung herstellbar ist. Dabei ist die Antastinformation vom Tastkopf zum Sende-Empfängerelement durch ein erstes Signal, dessen Trägerwelle eine Lichtwelle ist, und ein zusätzliches Signal, dessen Trägerwelle eine Funkwelle ist, übertragbar.

Zudem ist eine weitere Information bzw. sind weitere Informationen zwischen dem Tastkopf und dem Sende-Empfängerelement durch ein weiteres Signal dessen Trägerwelle eine Funkwelle ist, übertragbar.

Die Antastinformation gibt Auskunft darüber, ob der Taststift einen zu messenden Körper berührt. Als weitere Information kann eine Information gesehen werden, die sich von dieser Antastinformation unterscheidet.

Im Folgenden sind insbesondere unter Signalen, deren Trägerwellen Lichtwellen sind, Signale zu verstehen, welche in Form von modulierten Lichtwellen vorliegen. Als Lichtwelle wird im Folgenden eine elektromagnetische Welle verstanden, die in einem Frequenzband zwischen 0,3 THz (λ = 1 mm) und 30 PHz (λ = 10 nm) angesiedelt ist. Mit Vorteil liegt die Lichtwelle innerhalb eines Frequenzbandes von 100 THz (λ = 3 µm) bis 1000 THz (λ = 0,3 µm). Die Lichtwelle kann insbesondere dem Infrarot-Spektrum zugeordnet sein. Für das Senden und das Empfangen von Signalen, dessen Trägerwellen Lichtwellen sind, können insbesondere optoelektronische Komponenten verwendet werden.

Als Signale, deren Trägerwellen Funkwellen sind, sind jene Signale zu verstehen, welche in Form von modulierten Funkwellen vorliegen. Für das Senden und Empfangen von Signalen, deren Trägerwellen Funkwellen sind, können Antennenanordnungen eingesetzt werden. Das bevorzugte Frequenzband für Funkwellen liegt zwischen 0,3 MHz und 300 GHz. In vorteilhafter Ausgestaltung weist die Funkwelle eine Frequenz zwischen 3 MHz und 30 GHz auf.

Dabei kann der Tastkopf bezüglich Lichtwellen sensorlos ausgestaltet sein, so dass dieser keine Signale deren Trägerwellen Lichtwellen sind empfangen kann. Weiterhin kann der Tastkopf so konfiguriert sein, dass durch diesen Funkwellen sowohl sendbar als auch empfangbar sind. Das Sende-Empfängerelement kann so konfiguriert sein, dass durch dieses Lichtwellen empfangbar und Funkwellen sendbar sind, insbesondere kann das Sende-Empfängerelement so konfiguriert sein, dass zusätzlich auch Funkwellen empfangbar sind. Das Sende-Empfängerelement kann zudem bezüglich Lichtwellen senderlos bzw. stumm ausgestaltet sein, so dass dieses keine Signale, deren Trägerwellen Lichtwellen sind, senden kann.

In einer bevorzugten Ausgestaltung der Erfindung kann das Sensorelement als ein mechanisch wirkendes Element, etwa als ein Dehnmessstreifen oder als ein Piezoelement ausgestaltet sein oder als ein optisch wirkendes Element, beispielsweise als ein Fotoelement, in einer optischen Anordnung realisiert sein.

In vorteilhafter Ausgestaltung der Erfindung kann das weitere Signal vom Sende-Empfängerelement an den Tastkopf übertragbar sein. Alternativ oder ergänzend kann das weitere Signal vom Tastkopf zum Sende-Empfängerelement übertragbar sein. Weiterhin können bei der Übertragung von mehreren weiteren Signalen, diese weiteren Signale vom Tastkopf zum Sende-Empfängerelement und vom Sende-Empfängerelement an den Tastkopf übertragbar sein, wobei die weiteren Signale definitionsgemäß nicht die Antastinformation beinhalten oder tragen.

Erfindungsgemäss ist vom Tastkopf zum Sende-Empfängerelement ein zusätzliches Signal übertragbar, das die Antastinformation beinhaltet bzw. trägt und dessen Trägerwelle eine Funkwelle ist.

In weiterer Ausgestaltung der Erfindung kann die Antastinformation vom Tastkopf gleichzeitig bzw. parallel durch das erste Signal und das zusätzliche Signal zum Sende-Empfängerelement absetzbar bzw. sendbar sein. In diesem Zusammenhang kann weiterhin das Tastsystem so konfiguriert sein, dass die Antastinformation vom Sende-Empfängerelement an eine Folgeelektronik ausgebbar ist, sobald entweder das erste Signal oder das zusätzliche Signal im Sende-Empfängerelement zur Ausgabe aufbereitet ist, je nachdem welches der beiden Signale zuerst bzw. früher zur Ausgabe aufbereitet ist, so dass also das zuerst zur Ausgabe aufbereitete Signal zeitlich vorrangig ausgebbar ist.

Erfindungsgemäss ist im Tastkopf und / oder im Sende-Empfängerelement eine elektronische Einheit angeordnet, durch welche Zeitdifferenzen ermittelt werden, die für die elektronische Verarbeitung der Antastinformation im Tastkopf und / oder im Sende-Empfängerelement benötigt werden. Basierend auf diesen Zeitdifferenzen können dann entsprechende Korrekturzeitspannen an die Folgeelektronik ausgegeben werden zur Optimierung der Messgenauigkeit. Die Ausgabe der Korrekturzeitspannen ist insbesondere von Vorteil, wenn ein Datenbus zwischen dem Sende-Empfängerelement und der Folgeelektronik verwendet wird.

Mit Vorteil ist das Tastsystem so konfiguriert, dass die Antastinformation vom Sende-Empfängerelement an eine Folgeelektronik redundant zeitlich nacheinander ausgebbar ist. Insbesondere kann die redundant nacheinander ausgebbare Antastinformation zum einen auf dem ersten Signal und zum anderen auf dem zusätzlichen Signal basieren.

Alternativ hierzu kann das Tastsystem so konfiguriert sein, dass im Sende-Empfängerelement das erste Signal und das zusätzliche Signal empfangbar und in einer Weise auswertbar sind, so dass eine Überprüfung des korrekten redundanten Empfangs des ersten Signal und des zusätzlichen Signals durchführbar ist. Sofern der Ausgang dieser Überprüfung positiv ist, kann eine Bestätigungsinformation an die Folgeelektronik ausgegeben werden, die eine einwandfreie Übertragung der Antastinformation bestätigt. Somit können also vom Sende-Empfängerelement die Antastinformation und die Bestätigungsinformation an die Folgeelektronik, insbesondere nacheinander, ausgebbar sein.

In weiterer Ausgestaltung der Erfindung kann das Tastsystem so konfiguriert sein, dass die Antastinformation vom Sende-Empfängerelement an eine Folgeelektronik mit einem vorgegebenen und insbesondere konstanten Zeitversatz ausgebbar ist.

Weiterhin umfasst die Erfindung auch ein Verfahren zum Betrieb eines Tastsystems mit den beschriebenen Komponenten.

Vorteilhafte Ausbildungen der Erfindung entnimmt man den abhängigen Ansprüchen.

Weitere Einzelheiten und Vorteile des erfindungsgemäßen Tastsystems des Verfahrens ergeben sich aus der nachfolgenden Beschreibung zweier Ausführungsbeispiele anhand der beiliegenden Figuren.

Es zeigen die
- Figur 1: ein Tastsystem in einer Seitenansicht,
- Figur 2: eine Detailansicht eines Tastkopfs mit einem Sensorelement,
- Figur 3a: ein Prinzipschaltbild der Sende- und Empfängereinheit des Tastkopfes und des Sende-Empfängerelements, gemäß einer ersten Ausführungsform,
- Figur 3b: ein Prinzipschaltbild der Sende- und Empfängereinheit des Tastkopfes und des Sende-Empfängerelements, gemäß einer zweiten Ausführungsform,
- Figur 4: das Tastsystem, in einer Lage, in der der Tastkopf, bzw. dessen Taststift, ein Werkstück berührt,
- Figur 5a: ein Zeitdiagramm der Signalübertragung und -aufbereitung, gemäß der ersten Ausführungsform,
- Figur 5b: ein Zeitdiagramm der Signalübertragung und -aufbereitung, gemäß der zweiten Ausführungsform.

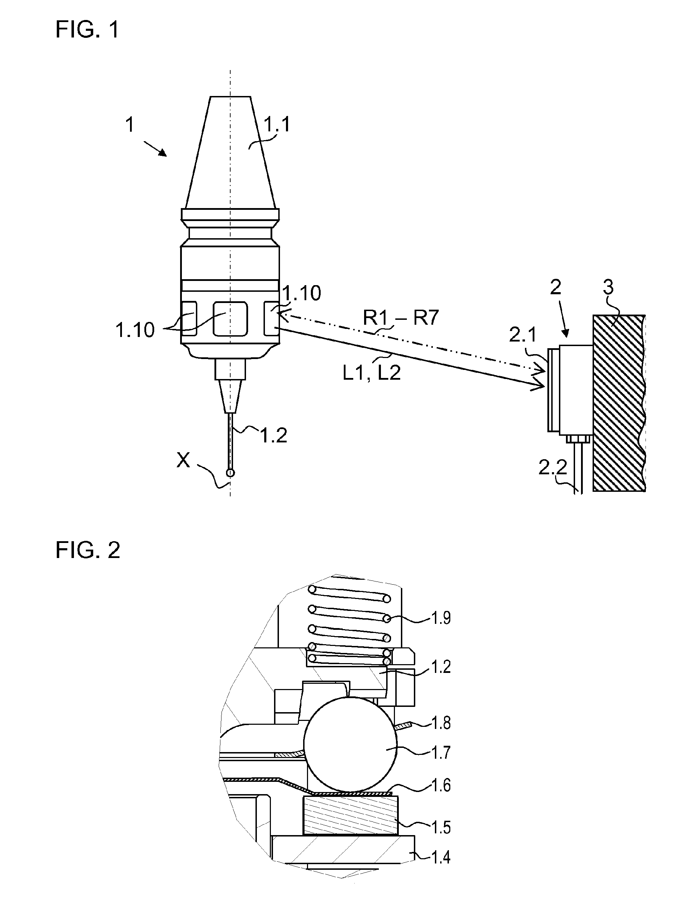

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse X des Tastkopfs 1 stellt gleichzeitig die Mittelachse des Spannkonus 1.1 dar. Parallel und konzentrisch zur Längsachse X ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

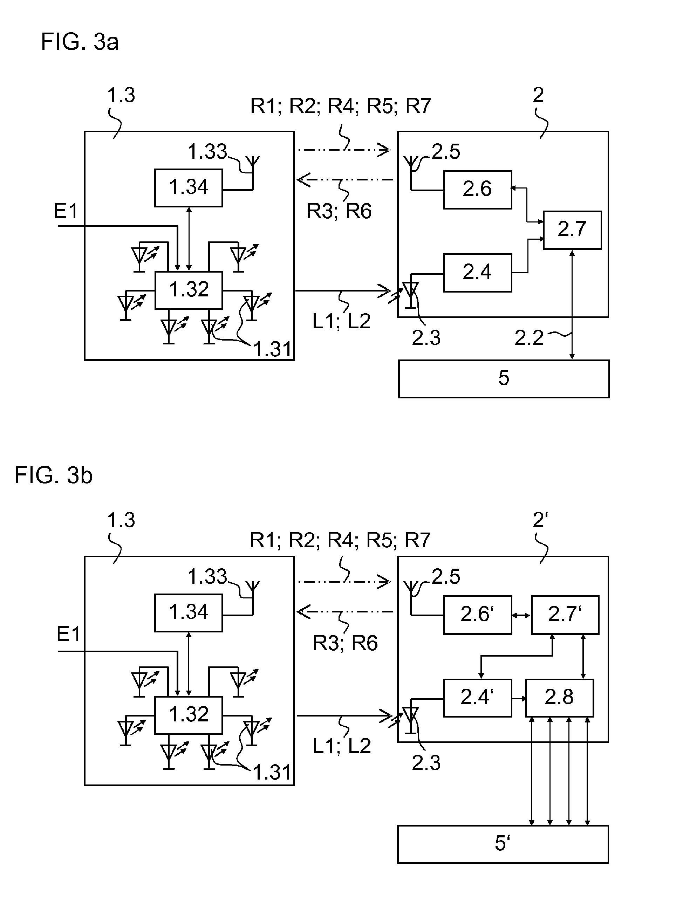

Ferner weist der Tastkopf 1 Fenster 1.10 auf, welche sowohl für Lichtwellen als auch für Funkwellen durchlässig ausgestaltet sind. Innerhalb des Tastkopfs 1 befindet sich gemäß der Figur 3a eine Sende- und Empfängereinheit 1.3. Diese weist Lichtquellen 1.31 auf, die von der Batterie im Tastkopf 1 gespeist werden und über dem Umfang des Tastkopfs 1 versetzt angeordnet sind. Im gezeigten Beispiel sind am Tastkopf 1 sechs Lichtquellen 1.31 vorgesehen, die jeweils um 60° versetzt entlang einer Umfangslinie am Tastkopf 1 angeordnet sind. Wie in der Figur 3a schematisch dargestellt, werden die Lichtquellen 1.31 von einer im Tastkopf 1 befindlichen CPU 1.32 angesteuert. Diese können hier Lichtwellen mit einer Wellenlänge von λ_{L} = 880 nm emittieren, was einer Frequenz f_{L} von ca. 340 THz entspricht. Im Übrigen ist der Tastkopf 1 bezüglich Lichtwellen sensorlos ausgestaltet, so dass vom Tastkopf 1 keine Signale, die auf Lichtwellen beruhen, empfangbar sind.

Weiterhin ist im Tastkopf 1 ein Funktransceiver 1.34 mit einer Antenne 1.33 angeordnet. Die Antenne 1.33 ist beispielsweise hinter den Fenstern 1.10 als umlaufender Draht im Tastkopf 1 untergebracht.

Das Sende-Empfängerelement 2 ist im vorgestellten Beispiel an einem stationären Bauteil 3 der Werkzeugmaschine befestigt und weist ein für Lichtwellen als auch für Funkwellen durchlässiges Fenster 2.1 auf, hinter dem ein optoelektronischer Empfänger 2.3 und ein weiterer Funktransceiver 2.6 mit einer Antenne 2.5 angeordnet sind (siehe Figur 3a). Ferner umfasst das Sende-Empfängerelement 2 einen Analog-Digital-Wandler 2.4 und eine integrierte Schaltung 2.7, z. B. in Form eines FPGA-Elements. Alternativ kann im Sende-Empfängerelement 2 auch eine Triggerschaltung ggf. mit einem regelbaren Verstärker zum Einsatz kommen.

Durch ein mehradriges Kabel 2.2 ist das Sende-Empfängerelement 2 zu dessen Energieversorgung am Stromnetz angeschlossenen. Überdies ist das Sende-Empfängerelement 2 über das Kabel 2.2 mit einer Folgeelektronik 5, die z. B. eine Numerischen Steuerung sein kann, mit der betreffenden Werkzeugmaschine elektrisch verbunden. Im ersten Ausführungsbeispiel ist im Übrigen eine bidirektionale Datenbusverbindung zwischen dem Sende-Empfängerelement 2 und der Folgeelektronik 5 eingerichtet.

In den vorgestellten Ausführungsbeispielen können die Funktransceiver 1.34, 2.6 Funkwellen mit einer Frequenz f_{R} = 2,4 GHz (λ_{F} = 12,5 cm) emittieren und empfangen.

Vor dem eigentlichen Messbetrieb wird der Tastkopf 1 beispielsweise in einer Spindel einer Werkzeugmaschine befestigt und dann eingeschaltet. Dabei wird vom Funktransceiver 2.6 des Sende-Empfängerelements 2 über die Antenne 2.5 ein Einschaltsignal R3, welches die Einschaltinformation beinhaltet und dessen Trägerwelle eine Funkwelle ist, abgesetzt. Dieses Einschaltsignal R3 wird über die Antenne 1.33 des Tastkopfes 1 empfangen und vom Funktransceiver 1.34 weiterverarbeitet. Mit Hilfe der CPU 1.32 wird durch die Einschaltinformation ein Einschalten bzw. Aktivieren des Tastkopfes 1 ausgelöst, so dass der Messbetrieb beginnen kann.

Sofern der Tastkopf 1 das erste Mal in Betrieb genommen wird, kann das Sende-Empfängerelement 2 vom Tastkopf 1 eine Parameterinformation, insbesondere eine Typeninformation abfragen. Diese wird vom Tastkopf 1 zum Sende-Empfängerelement 2 mit Hilfe eines Parametersignals R4, dessen Trägerwelle eine Funkwelle ist, übertragen. Die Typeninformation wird dann gegebenenfalls an die Folgeelektronik 5 weitergeleitet und eine entsprechende Konfiguration der Folgeelektronik 5 und / oder des Sende-Empfängerelements 2 durchgeführt.

Ferner kann danach überprüft werden, ob der Tastkopf 1 für den Betrieb mit dem in der Werkzeugmaschine montierten Sende-Empfängerelement 2 authentifiziert ist. Zu diesem Zweck wird über den Funktransceiver 2.6 eine entsprechende Abfrage gestartet. Diese löst eine Übertragung einer Authentifizierungsinformation vom Tastkopf 1 zum Sende-Empfängerelement 2 aus mit Hilfe des Authentifizierungssignals R5, dessen Trägerwelle eine Funkwelle ist. Wenn diese Authentifizierungsinformation erfolgreich an das Sende-Empfängerelement 2 übertragen wurde, also eine Betriebsberechtigung vorliegt, wird dies der Folgeelektronik 5 weitergegeben und es können ggf. bestimmte Steuerungsoptionen für die Werkzeugmaschine freigegeben werden. Trotz einer negativen Authentifizierung kann ein Betrieb des Tastkopfes 1 im Tastsystem gegebenenfalls möglich sein, z. B. unter kostenpflichtiger Nutzung der genannten Steuerungsoptionen.

Optional kann das Tastsystem so konfiguriert sein, dass vor dem eigentlichen Messbetrieb weiterhin eine Einstellung drei verschiedener Modi möglich ist. Insbesondere kann der Bediener nach dem Einschalten des Sende-Empfängerelements 2 auswählen, ob das Tastsystem a) in einem reinen Funkmodus oder b) in einem reinen IR-Modus oder c) in einem Hybrid-Modus betrieben werden soll.

Im Funkmodus nach Option a) wird sämtliche Information vom Tastkopf 1 zum Sende-Empfängerelement 2 und umgekehrt durch Signale übertragen, deren Trägerwelle eine Funkwelle ist. Diese Option kann insbesondere gewählt werden, wenn im folgenden Anwendungsfall beispielsweise hohe Reichweiten für die Signalübertragung erforderlich sein werden und / oder viele Tastköpfe 1 auf engem Raum vorliegen.

Der reine IR-Modus nach Option b) zeichnet sich dadurch aus, dass sämtliche Information vom Tastkopf 1 zum Sende-Empfängerelement 2 durch Signale übertragen, deren Trägerwelle eine Lichtwelle ist. Diese Option wird beispielsweise gewählt werden, wenn eine sehr hohe Störfestigkeit gegen Funkwellen verlangt ist und / oder eine verzögerungsminimierte Signalübertragung im Vordergrund steht.

Wenngleich der Betrieb gemäß den Optionen a) und b) nur jeweils auf einer Art von Trägerwelle beruht, so ist das Tastsystem dennoch für die Signalübertragung über Licht- und Funkwellen ausgebildet.

Üblicherweise wird das Tastsystem gemäß dem Hybrid-Modus c) betrieben. Diese Betriebsart liegt der weiteren Beschreibung der Ausführungsbeispiele zu Grunde.

Jedem Tastsystem wird gewöhnlich eine Funkkanalnummer manuell oder automatisiert zugeordnet, wenn beispielsweise mehrere Tastsysteme in einer Maschinenhalle parallel betrieben werden. Das Tastsystem umfasst ein Sende-Empfängerelement 2 und einen oder mehrere Tastköpfe 1. Da bei Verwendung von mehreren Tastköpfen 1 lediglich nur immer ein Tastkopf 1 zu einem Zeitpunkt aktiv ist, kann pro Tastsystem bzw. pro Sende-Empfängerelement 2 eine Funkkanalnummer vergeben werden, so dass innerhalb eines Tastsystems problemlos mehreren Tastköpfen 1 die gleiche Funkkanalnummer zugewiesen sein kann. Die Funkkanalnummer kann gleichzeitig als Adresse für die Übertragung auf dem Weg der Lichtwellen verwendet werden, so dass dadurch bezüglich der Übertragung zu dem jeweils aktiven Tastkopf 1 eine eindeutige Zuweisung bei minimalem Einrichtungsaufwand und unter Verwendung von kurzen Adressen möglich ist. Der Einfachheit halber wird im Folgenden ein Tastsystem beschrieben, welches nur einen Tastkopf 1 umfasst.

Im Messbetrieb wird der Tastkopf 1 innerhalb eines Bearbeitungsraumes der Werkzeugmaschine verfahren oder um eine Achse, die orthogonal zur Längsachse X ausgerichtet ist, geschwenkt. Vom Funktransceiver 1.34 des Tastkopfes 1 wird im Messbetrieb laufend ein Bereitschaftsignal R2, welches eine Bereitschaftsinformation beinhaltet, an das Sende-Empfängerelement 2 übertragen, um zu signalisieren, dass die Kommunikationsverbindung zum Tastkopf 1 korrekt arbeitet. Die Bereitschaftsinformation wird also durch das Bereitschaftsignal R2, dessen Trägerwelle eine Funkwelle ist, übertragen. Bei Empfang der Bereitschaftsinformation durch das Sende-Empfängerelement 2 wird der Messbetrieb aufrechterhalten. Für den Fall, dass, z. B. durch eine elektromagnetische Störung, die einwandfreie Übertragung des Bereitschaftsignal R2 scheitert, wenn z. B. eine Acknowledge-Meldung des Sende-Empfängerelements 2 ausbleibt, setzt der Tastkopf 1 das Bereitschaftsignal R2 als auch ein weiteres Bereitschaftssignal L2 ab. Das weitere Bereitschaftssignal L2 wird dagegen von den Lichtquellen 1.31 emittiert, wobei dessen Trägerwelle entsprechend eine Lichtwelle ist. Wenn das Bereitschaftsignal R2 oder auch nur das weitere Bereitschaftssignal L2 erfolgreich übertragen wird, so wird der Messbetrieb weiterhin aufrechterhalten. Auf diese Weise kann wirksam eine Beeinträchtigung des Messbetriebs des Tastsystems verhindert werden, auch wenn starke elektromagnetische Störeinflüsse vorliegen.

Alternativ kann auch nur das weitere Bereitschaftssignal L2 übertragen werden, ohne redundante funkgestützte Übertragung des anderen Bereitschaftsignals R2.

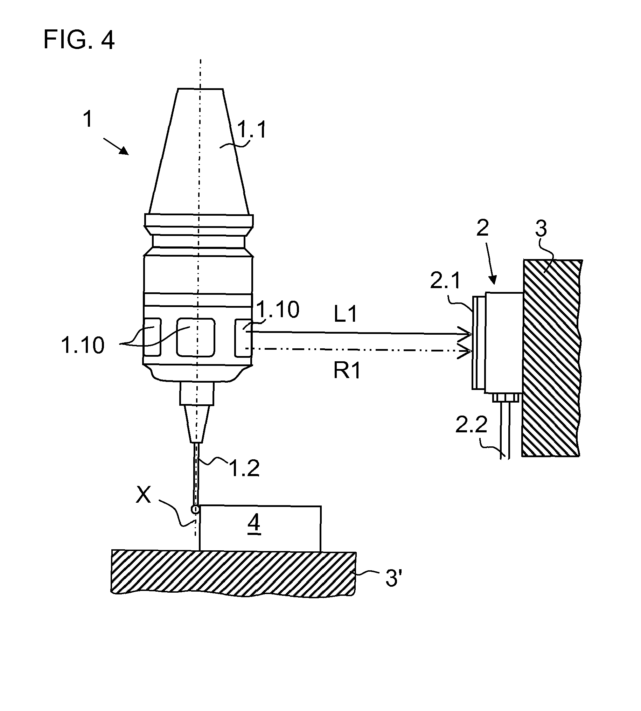

In der Figur 4 ist eine Situation dargestellt, in welcher der Taststift 1.2 ein Werkstück 4, welches an einem Aufspanntisch 3' der Werkzeugmaschine befestigt ist, antastet. In dieser Situation wird von den Sensorelementen 1.5 zum Zeitpunkt t₀ ein elektrisches Sensorsignal E1 erzeugt, das entsprechend eine Antastinformation beinhaltet. Das Auftreten des Sensorsignals E1 führt zum Senden eines ersten Signals L1 und gleichzeitig eines zusätzlichen Signals R1, wobei beide selbstredend ebenfalls die Antastinformation beinhalten.

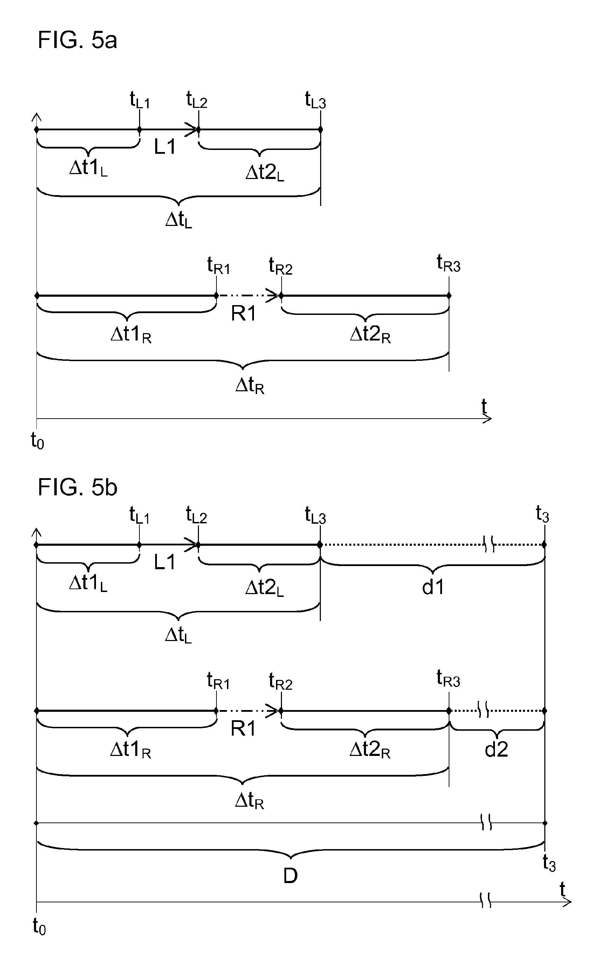

Das erste Signal L1 wird von den Lichtquellen 1.31 zum Zeitpunkt t_{L1} (siehe Figur 5a) abgesetzt und weist folglich eine Trägerwelle auf, die eine Lichtwelle ist. Die Antastinformation bzw. das erste Signal L1 wird zum Sende-Empfängerelement 2 gesendet und vom optoelektronischen Empfänger 2.3 zum Zeitpunkt t_{L2} empfangen. Dort wird das erste Signal L1 in ein elektrisches Signal gewandelt, welches im Analog-Digital-Wandler 2.4 digitalisiert und danach der integrierten Schaltung 2.7 zugeführt wird, so dass dann die Antastinformation zur Ausgabe an eine Folgeelektronik 5 zum Zeitpunkt t_{L3} über das Kabel 2.2 aufbereitet ist. Bei einer einwandfreien bzw. störungsfreien Informationsübertragung über Lichtwellen vergehen etwa 0,2 ms zwischen dem Zeitpunkt t₀ der Antastung und dem Zeitpunkt t_{L3} der Ausgabe der Antastinformation vom Sende-Empfängerelement 2 an die Folgeelektronik 5 (Δt_{L} = t_{L3} - t₀ ≈ 0,2 ms). Zu berücksichtigen ist in diesem Zusammenhang, dass die Zeit, welche das Signal L1, aber auch das zusätzliche Signal R1 auf dem Weg von Tastkopf 1 bei zum Sende-Empfängerelement 2 benötigt verschwindend klein ist und im Folgenden nicht weiter berücksichtigt wird. Die Zeiträume in den Figuren 5a und 5b sind schon aus diesem Grunde nicht maßstäblich dargestellt.

Das zusätzliche Signal R1 wird vom Funktransceiver 1.34 in Verbindung mit der Antenne 1.33 des Tastkopfes 1 zum Zeitpunkt t_{R1} abgesetzt und weist folglich eine Trägerwelle auf, die eine Funkwelle ist. Die Antastinformation wird also redundant durch das zusätzliche Signal R1 zum Sende-Empfängerelement 2 übertragen. Im vorliegenden Fall wird das zusätzliche Signal R1 zum Zeitpunkt t_{R2} von der Antenne 2.5 aufgefangen und vom Funktransceiver 2.6 in ein digitales elektrisches Signal umgewandelt. Nachkommend wird es der integrierten Schaltung 2.7 zugeführt. Üblicherweise benötigt insgesamt die Übertragung der Antastinformation auf dem Wege der Funkwellen länger als via Lichtwellen, insbesondere wegen unterschiedlichem Zeitbedarf für die elektronische Weiterverarbeitung der Antastinformation. Im vorliegenden Beispiel werden zur Übertragung der Antastinformation über Funkwellen eine Zeitspanne Δt_{R} von etwa 1 ms benötigt, ausgehend vom Antastzeitpunkt t₀ bis zum Zeitpunkt t_{R3} der Ausgabe der Antastinformation vom Sende-Empfängerelement 2 an die Folgeelektronik 5 (Δt_{R} = t_{R3} - t₀ ≈ 1 ms). Falls elektromagnetische Störungen die Übertragung des zusätzlichen Signals R1 behindern, kann sich der Wert für Δt_{R} überdies deutlich erhöhen.

Sobald die Antastinformation an die Folgeelektronik 5 übertragen ist, wird die Position bestimmt, an welcher die Berührung des Werkstücks erfolgte und die Folgeelektronik 5 löst gleichzeitig einen Stopp der Werkzeugmaschine aus, so dass der Tastkopf 1 relativ zum Werkstück 4 nicht mehr bewegt wird. Üblicherweise verfügen Werkzeugmaschinen über genaue Messeinrichtungen, welche die Spindelposition bestimmen, so dass diese Messwerte für die Bestimmung der Berührposition verwendet werden. Da üblicherweise Δt_{R} größer ist als Δt_{L}, ist also die Antastinformation über den Weg der Lichtwellenübertragung zum Zeitpunkt t_{R3} schon in der Folgeelektronik 5 eingetroffen. Entsprechend löst also im gezeigten Beispiel die Antastinformation, welche via Lichtwellen übertragen wurde, die genannten Maßnahmen in der Folgeelektronik 5 aus. Gleichwohl wird zum Zeitpunkt t_{R3} erneut die Antastinformation, die durch das zusätzliche Signal R1 übertragen wurde, an die Folgeelektronik 5 ausgegeben zur Bestätigung, dass tatsächlich ein Antastvorgang stattgefunden hat. Es ist demnach das Tastsystem so konfiguriert, dass die Antastinformation vom Sende-Empfängerelement 2 an die Folgeelektronik 5 redundant nacheinander ausgebbar ist.

Es kann aber auch vorkommen, dass beispielsweise durch Störungen des ersten Signals L1 eine Zeitspanne Δt_{L}* zwischen dem Zeitpunkt t₀ der Antastung und einem Zeitpunkt t_{L3}^{*} der Ausgabe der Antastinformation vom Sende-Empfängerelement 2 an die Folgeelektronik 5 entsteht, die größer ist als die Zeitspanne Δt_{R}. Weitaus häufiger kann auch der Fall eintreten, dass die Übertragung der Antastinformation über den Weg der Lichtwellen gänzlich fehlschlägt (Δt_{L}*→ ∞). In diesem Fall kann die über die Funkwellen übertragene Antastinformation den Stopp und die Messung auslösen. Die über die Lichtwellen übertragene Antastinformation dient dann gegebenenfalls als Bestätigung des Antastvorganges.

Um die Messgenauigkeit zu erhöhen, kann im Sende-Empfängerelement 2 der Zeitpunkt t_{L2} des Empfangs des ersten Signals L1 und / oder der Zeitpunkt t_{R2} des Empfangs des zusätzlichen Signals R1 festgehalten werden. Weiterhin können die späteren Zeitpunkte t_{L3} und / oder t_{R3} bestimmt werden, zu dem die Antastinformation an die Folgeelektronik 5 jeweils ausgegeben wird. Die Information über die verstrichene Zeit Δt2_{L} (= t_{L3} - t_{L2}) zwischen dem Zeitpunkt t_{L2} des Empfangs des ersten Signals L1 und dem Zeitpunkt t_{L3} der Ausgabe der Antastinformation vom Sende-Empfängerelement 2 an die Folgeelektronik 5 kann ebenfalls an die Folgeelektronik 5 ausgegeben werden. Gleichermaßen kann ergänzend oder alternativ hierzu die verstrichene Zeit Δt2_{R} (= t_{R3} - t_{R2}) zwischen dem Zeitpunkt t_{R2} des Empfangs des zusätzlichen Signals R1 und dem Zeitpunkt t_{R3} der Ausgabe der Antastinformation vom Sende-Empfängerelement 2 an die Folgeelektronik 5 bestimmt werden. Die verstrichenen Zeiten Δt2_{L}, Δt2_{R} entsprechen also den Zeiten, die für die jeweilige elektronische Aufbereitung der Antastinformation im Sende-Empfängerelement 2 gebraucht wurden.

Die kürzere der verstrichenen Gesamtzeiten Δt_{L}, Δt_{R} wird dann bei der Bestimmung der Berührposition unter Berücksichtigung der Verfahrgeschwindigkeit des Tastkopfes 1 relativ zum Werkstück 4 in der Folgeelektronik verwendet.

Weiterhin kann zur Erhöhung der Messgenauigkeit der Tastkopf 1 so konfiguriert sein, dass in diesem eine Zeitdifferenz Δt1_{R} ermittelt wird, die zwischen dem Zeitpunkt t₀ des Antastens (Auftreten des Sensorsignals E1) und dem Zeitpunkt t_{R1} des Absetzens des zusätzlichen Signals R1 über die Antenne 1.33 vergeht (Δt1_{R} = t_{R1} - t₀). Die Zeitdifferenz At1 _{R} entspricht also der Zeit, die für die elektronische Aufbereitung der Antastinformation im Tastkopf 1 gebraucht wurde. Zusammen mit der Antastinformation wird die Information bezüglich der Zeitdifferenz Δt1_{R} durch ein Zeitdifferenzsignal R7, dessen Trägerwelle eine Funkwelle ist, zum Sende-Empfängerelement 2 übertragen. Diese Information basierend auf der Zeitdifferenz Δt1_{R,} die als Korrekturzeitspanne Δt_{K} bezeichnet werden kann, wird dann letztlich ebenfalls vom Sende-Empfängerelement 2 an die Folgeelektronik 5 ausgegeben und bei der Bestimmung der Berührposition unter Berücksichtigung der Verfahrgeschwindigkeit verwendet.

Es kann mit einer analogen Methode auch für die Übertragung via Lichtwellen eine Zeitdifferenz Δt1_{L} für die elektronische Aufbereitung der Antastinformation im Tastkopf 1 ermittelt und mit Lichtwellen gesendet werden.

Zur Optimierung des Energieverbrauchs des Tastkopfes 1 kann jedoch darauf verzichtet werden, dass die Zeitdifferenz Δt1_{L} ermittelt wird, die zwischen dem Zeitpunkt t₀ des Antastens (Auftreten des Sensorsignals E1) und dem Zeitpunkt t_{L1} des Absetzens des ersten Signals L1 über die Lichtquellen 1.33 vergeht. Somit braucht keine Information bezüglich dieser Zeitdifferenz über den Weg der Lichtwellen zum Sende-Empfängerelement 2 übertragen werden, was energetisch vorteilhaft ist. In diesem Fall kann trotzdem die Messgenauigkeit mit gutem Erfolg gesteigert werden. Hierzu ist im Sende-Empfängerelement 2 eine konstante Zeitdifferenz Δt_{C} hinterlegt, die näherungsweise als diejenige Zeit herangezogen wird, die für die elektronische Aufbereitung der Antastinformation im Tastkopf 1 gebraucht wird, sofern die Antastinformation über das erste Signal L1 empfangen wurde.

Alternativ kann im Hinblick auf einen optimierten Messbetrieb auch die Zeitdifferenz Δt1_{L}_mittels Lichtwelle zum Sende-Empfängerelement 2 übertragen werden. Zur Reduzierung der zu übertragenden Information kann zunächst von der Voraussetzung ausgegangen werden, dass ein Datenrahmen mit definierter gleichbleibender zeitlicher Länge Δt1_{LF} vom Tastkopf 1 n-mal gesendet werden muss, bis ein einwandfreier Empfang erreicht wird (mit n als natürlicher Zahl ≥ 1). Sofern die zeitliche Länge Δt1_{LF} im Sende-Empfängerelement 2 oder in der Folgeelektronik 5 als eine konstante Zeit hinterlegt ist, kann dort nur durch Übertragung der Zahl n eine Zeitdifferenz Δt1_{L}bestimmt werden, unter Berücksichtigung der Beziehung Δt1_{L} = n·Δt1_{LF} + K, wobei K eine vorgegebene Zeitkonstante ist. In diesem Fall kann also die Information bezüglich der Zahl n via Lichtwelle übertragen werden. Die Informationen bezüglich der Werte von K und Δt1_{LF} werden vorzugsweise jeweils beim Verbindungsaufbau zwischen dem Sende-Empfängerelement 2 und dem Tastkopf 1 übertragen und bleiben danach während des eigentlichen Messbetriebs unverändert im Sende-Empfängerelement 2 oder in der Folgeelektronik 5 hinterlegt.

Somit können vom Sende-Empfängerelement 2 an die Folgeelektronik 5 zur Korrektur der Berührposition Informationen über folgende Korrekturzeitspannen Δt_{K} ausgegeben werden:
a) im Fall der Übertragung der Antastinformation über Lichtwellen

| | | | | |
|---|---|---|---|---|
| Δt_{K} = Δt_{C}; | oder | Δt_{K} = Δt1_{L}; | oder | Δt_{K} = Δt2_{L}; oder |
| Δt_{K} = Δt_{C} + Δt2_{L}, | oder | At_{K} = Δt1_{L} + Δt2_{L}; | | |

b) im Fall der Übertragung der Antastinformation über Funkwellen

| | | | | |
|---|---|---|---|---|
| Δt_{K} = Δt1_{R}; | oder | Δt_{K} = Δt2_{R}; | oder | Δt_{K} = Δt1_{R} + Δt2_{R}; |

Das Tastsystem ist so konfiguriert, dass die Antastinformation vom Sende-Empfängerelement 2 an die Folgeelektronik 5 ausgebbar ist, sobald entweder das erste Signal L1 (im Fall Δt_{L} < Δt_{R}) oder das zusätzliche Signal R1 (im Fall Δt_{L} > Δt_{R}) im Sende-Empfängerelement 2 zur Ausgabe aufbereitet ist. Insbesondere können abhängig von der jeweiligen Größe der Zeitdifferenzen Δt_{L} und Δt_{R} folgende Korrekturzeitspannen Δt_{K} für das den Stopp auslösende Signal festgelegt werden:

| | | | | |
|---|---|---|---|---|
| Δt_{L} < Δt_{R} => | Δt_{K} = Δt_{C}; | oder | Δt_{K} = Δt1_{L}; oder | Δt_{K} = Δt2_{L} oder |
| | Δt_{K} = Δt_{C} + t2_{L} | oder | Δt_{K} = Δt1_{L} + Δt2_{L} | |
| Δt_{L} > Δt_{R} => | Δt_{K} = Δt1_{R}; | oder | Δt_{K} = Δt2_{R}; oder | Δt_{K} = Δt1_{R} + t2_{R}, |

Im vorgestellten ersten Ausführungsbeispiel ist also im Tastkopf 1 und im Sende-Empfängerelement 2 jeweils eine elektronische Einheit angeordnet, durch welche Zeitdifferenzen Δt1_{L}, Δt2_{L}, Δt1_{R}, Δt2_{R} ermittelt werden, die für die elektronische Verarbeitung der Antastinformation im Tastkopf 1 und im Sende-Empfängerelement 2 benötigt werden. Basierend auf zumindest einer dieser Zeitdifferenzen Δt1_{L}, Δt2_{L}, Δt1_{R}, Δt2_{R} wird dann eine entsprechende Korrekturzeitspanne At_{K} an die Folgeelektronik 5 ausgegeben zur Optimierung der Messgenauigkeit. Die Ausgabe der Korrekturzeitspanne Δt_{K} ist insbesondere von Vorteil, wenn ein Datenbus zwischen dem Sende-Empfängerelement 2 und der Folgeelektronik 5 verwendet wird.

Für den Fall, dass die Übertragung der Antastinformation über Lichtwellen fehlschlägt, beispielsweise durch ein opakes Hindernis im Weg des ersten Signals L1, löst das Eintreffen der Antastinformation auf dem anderen Wege der Funkwellen einen Stopp der Werkzeugmaschine aus.

Gemäß einem zweiten Ausführungsbeispiel (Figuren 3b und 5b) ist das Sende-Empfängerelement 2' abgewandelt und weist zusätzlich einen Signalspeicher 2.8 auf. Ein derartiges Sende-Empfängerelement 2' wird mit Vorteil dann angewendet, wenn keine Datenbusverbindung zwischen dem Sende-Empfängerelement 2' und einer Folgeelektronik 5' vorliegt. Das zweite Ausführungsbeispiel unterscheidet sich vom ersten unter anderem dadurch, dass die Ausgabe der Antastinformation an die Folgeelektronik 5' um einen konstanten vorgegebenen Zeitversatz D zeitverzögert erfolgt. Dabei werden die Zeitdifferenzen Δt_{L} bzw. At_{R} wie im ersten Ausführungsbeispiel bestimmt und Verzögerungswerte d1 und d2 nach den Bedingungen d1 = D -Δt_{L} bzw. d2 = D -Δt_{R} errechnet.

Auch im zweiten Ausführungsbeispiel ist also im Tastkopf und im Sende-Empfängerelement jeweils eine elektronische Einheit angeordnet, durch welche Zeitdifferenzen Δt1_{L}, Δt2_{L}, Δt1_{R}, Δt2_{R} ermittelt werden, die für die Verarbeitung der Antastinformation im Tastkopf 1 und im Sende-Empfängerelement 2 benötigt werden.

Der Zeitversatz D kann beispielsweise als 10 ms vorgegeben werden. Nach dieser Zeit wird die Antastinformation an die Folgeelektronik 5' weitergeleitet, so dass bei der Bestimmung der Berührposition der in der Folgeelektronik 5' hinterlegte Zeitversatz D zusammen mit der Verfahrgeschwindigkeit verwendet wird. Dabei spielt es keine Rolle, ob die Antastinformation über eine Licht- oder Funkwelle, also über das erste Signal L1 oder über das zusätzliche Signal R2 in das Sende-Empfängerelement 2' gelangt ist. Somit wird also im zweiten Ausführungseispiel eine Korrekturzeitspanne Δt_{K}' = D angesetzt, wobei, wie bereits oben erwähnt, die Zeiträume, innerhalb welcher das Signal L1, oder das zusätzliche Signal R1 auf dem Weg von Tastkopf 1 zum Sende-Empfängerelement 2 benötigen, in guter Näherung vernachlässigt werden.

In der folgenden Tabelle sind die Übertragungsoptionen gemäß den Ausführungsbeispielen zusammenfassend dargestellt, wobei die Richtung 1 → 2 eine Übertragung vom Tastkopf 1 zum Sende-Empfängerelement 2 bedeutet und 2 → 1 entsprechend die entgegengesetzte Übertragungsrichtung zum Ausdruck bringt.

| Signal | Information | Richtung | Trägerwelle |
|---|---|---|---|
| L1 | Antastinformation | 1 → 2 | Lichtwelle |
| R1 | Antastinformation | 1 → 2 | Funkwelle |
| L2 | Bereitschaftsinformation | 1 → 2 | Lichtwelle |
| R2 | Bereitschaftsinformation | 1 → 2 | Funkwelle |
| R3 | Einschaltinformation | 2 → 1 | Funkwelle |
| R4 | Parameterinformation | 1 → 2 | Funkwelle |
| R5 | Authentifizierungsinformation | 1 → 2 | Funkwelle |
| R6 | Einstellungsinformation | 2 → 1 | Funkwelle |
| R7 | Korrekturzeitspanne | 1 → 2 | Funkwelle |

## Patentansprüche

1. Tastsystem, umfassend
- einen Tastkopf (1), der einen Taststift (1.2) und ein Sensorelement (1.5) aufweist, wobei durch Berührung des Taststifts (1.2) vom Sensorelement (1.5) ein Sensorsignal (E1) erzeugbar ist, welches eine Antastinformation beinhaltet, sowie
- ein Sende-Empfängerelement (2, 2'), wobei der Tastkopf (1) und das Sende-Empfängerelement (2, 2') derart konfiguriert sind, dass zwischen diesen eine drahtlose Informationsübertragung herstellbar ist, **dadurch gekennzeichnet, dass** die Antastinformation vom Tastkopf (1) zum Sende-Empfängerelement (2, 2') durch ein erstes Signal (L1), dessen Trägerwelle eine Lichtwelle ist, und ein zusätzliches Signal (R1), dessen Trägerwelle eine Funkwelle ist, übertragbar ist, und zudem weitere Information zwischen dem Tastkopf (1) und dem Sende-Empfängerelement (2, 2') durch zumindest ein weiteres Signal (R2 - R7) dessen Trägerwelle eine Funkwelle ist, übertragbar ist, wobei
im Tastkopf (1) und / oder im Sende-Empfängerelement (2, 2') eine elektronische Einheit angeordnet ist, durch welche für die elektronische Verarbeitung der Antastinformation im Tastkopf (1) und / oder im Sende-Empfängerelement (2, 2') benötigte Zeitdifferenzen (Δt1_{L}, Δt2_{L}, Δt1_{R}, Δt2_{R}) ermittelbar sind, so dass zur Optimierung der Messgenauigkeit basierend auf diesen Zeitdifferenzen (Δt1_{L}, Δt2_{L}, Δt1_{R}, Δt2_{R}) entsprechende Korrekturzeitspannen (Δt_{K}) an eine Folgeelektronik (5) ausgebebar sind.

2. Tastsystem gemäß dem Anspruch 1, **dadurch gekennzeichnet, dass** der Tastkopf (1) bezüglich Lichtwellen sensorlos ausgestaltet ist.

3. Tastsystem gemäß dem Anspruch 1 oder 2, **dadurch gekennzeichnet, dass** das zumindest eine weitere Signal (R2, R4, R5, R7) vom Tastkopf (1) zum Sende-Empfängerelement (2, 2') übertragbar ist.

4. Tastsystem gemäß dem Anspruch 1 oder 2, **dadurch gekennzeichnet, dass** das zumindest eine weitere Signal (R3, R6) vom Sende-Empfängerelement (2, 2') an den Tastkopf (1) übertragbar ist.

5. Tastsystem gemäß einem der vorhergehenden Ansprüche, **dadurch gekennzeichnet, dass** die Antastinformation vom Tastkopf (1) gleichzeitig durch das erste Signal (L1) und das zusätzliche Signal (R1) zum Sende-Empfängerelement (2, 2') absetzbar sind.

6. Tastsystem gemäß einem der vorhergehenden Ansprüche, **dadurch gekennzeichnet, dass** das Tastsystem so konfiguriert ist, dass die Antastinformation vom Sende-Empfängerelement (2) an eine Folgeelektronik (5) ausgebbar ist, sobald entweder das erste Signal (L1) oder das zusätzliche Signal (R1) im Sende-Empfängerelement (2) zur Ausgabe aufbereitet ist.

7. Tastsystem gemäß einem der vorhergehenden Ansprüche, **dadurch gekennzeichnet, dass** das Tastsystem so konfiguriert ist, dass vom Sende-Empfängerelement (2, 2') die Antastinformation und eine Bestätigungsinformation an die Folgeelektronik (5) ausgebbar ist.

8. Tastsystem gemäß einem der Ansprüche 1 bis 5, **dadurch gekennzeichnet, dass** das Tastsystem so konfiguriert ist, dass die Antastinformation vom Sende-Empfängerelement (2') an eine Folgeelektronik (5') mit vorgegebenem Zeitversatz (D) ausgebbar ist.

9. Verfahren zum Betrieb eines Tastsystems, das einen Tastkopf (1) und ein Sende-Empfängerelement (2, 2') aufweist, wobei der Tastkopf (1) einen Taststift (1.2) und ein Sensorelement (1.5) umfasst, wobei durch Berührung des Taststifts (1.2) vom Sensorelement (1.5) ein Sensorsignal (E1) erzeugt wird, welches eine Antastinformation beinhaltet, wobei zwischen diesen eine drahtlose Informationsübertragung hergestellt wird, **dadurch gekennzeichnet, dass**
die Antastinformation vom Tastkopf (1) zum Sende-Empfängerelement (2, 2') durch ein erstes Signal (L1), dessen Trägerwelle eine Lichtwelle ist, und ein zusätzliches Signal (R1), dessen Trägerwelle eine Funkwelle ist, übertragen wird, und zudem
weitere Information zwischen dem Tastkopf (1) und dem Sende-Empfängerelement (2, 2') durch zumindest ein weiteres Signal (R2 - R7) dessen Trägerwelle eine Funkwelle ist, übertragen wird, wobei
im Tastkopf (1) und / oder im Sende-Empfängerelement (2, 2') eine elektronische Einheit angeordnet ist, durch welche für die elektronische Verarbeitung der Antastinformation im Tastkopf (1) und / oder im Sende-Empfängerelement (2, 2') benötigte Zeitdifferenzen (Δt1_{L}, Δt2_{L}, Δt1_{R}, Δt2_{R}) ermittelt werden, so dass zur Optimierung der Messgenauigkeit basierend auf diesen Zeitdifferenzen (Δt1_{L}, Δt2_{L}, Δt1_{R}, Δt2_{R}) entsprechende Korrekturzeitspannen (Δt_{K}) an eine Folgeelektronik (5) ausgegeben werden.

10. Verfahren gemäß dem Anspruch 9, **dadurch gekennzeichnet, dass** das zumindest eine weitere Signal (R2, R4, R5, R7) vom Tastkopf (1) zum Sende-Empfängerelement (2, 2') übertragen wird.

11. Verfahren gemäß dem Anspruch 9, **dadurch gekennzeichnet, dass** das zumindest eine weitere Signal (R3, R6) vom Sende-Empfängerelement (2, 2') an den Tastkopf (1) übertragen wird.

12. Verfahren gemäß dem Anspruch 9, **dadurch gekennzeichnet, dass** die Antastinformation vom Tastkopf (1) gleichzeitig durch das erste Signal (L1) und das zusätzliche Signal (R1) zum Sende-Empfängerelement (2, 2') abgesetzt wird.

13. Verfahren gemäß dem Anspruch 9, 10, 11 oder 12, **dadurch gekennzeichnet, dass** die Antastinformation vom Sende-Empfängerelement (2) an die Folgeelektronik (5) ausgegeben wird, sobald entweder das erste Signal (L1) oder das zusätzliche Signal (R1) im Sende-Empfängerelement (2) zur Ausgabe aufbereitet wurde.

14. Verfahren gemäß dem Anspruch 9, 10, 11, 12 oder 13, **dadurch gekennzeichnet, dass** vom Sende-Empfängerelement (2, 2') die Antastinformation und eine Bestätigungsinformation an eine Folgeelektronik (5) ausgegeben wird.

15. Verfahren gemäß einem der Ansprüche 9 bis 14, **dadurch gekennzeichnet, dass** die Antastinformation vom Sende-Empfängerelement (2') an eine Folgeelektronik (5') mit vorgegebenem Zeitversatz (D) ausgegeben wird.

## Claims

1. Probe system, comprising
- a probe head (1) which has a stylus (1.2) and a sensor element (1.5), wherein a sensor signal (E1), which contains an item of touching information, is generatable by the sensor element (1.5) by moving the stylus (1.2), and
- a transmitter-receiver element (2, 2'), wherein
the probe head (1) and the transmitter-receiver element (2, 2') are configured such that wireless information transfer can be produced between said probe head and transmitter-receiver element, **characterized in that** the item of touching information can be transmitted from the probe head (1) to the transmitter-receiver element (2, 2') by a first signal (L1) the carrier wave of which is an optical wave, and an additional signal (R1) the carrier wave of which is a radio wave, and, in addition, a further item of information can be transmitted between the probe head (1) and the transmitter-receiver element (2, 2') by at least one further signal (R2-R7) the carrier wave of which is a radio wave, wherein
an electronic unit is arranged in the probe head (1) and/or in the transmitter-receiver element (2, 2'), by means of which electronic unit time differences (Δt1_{L}, Δt2_{L}, Δt1_{R}, Δt2_{R}) which are necessary for the electronic processing of the item of touching information in the probe head (1) and/or in the transmitter-receiver element (2, 2') can be calculated, with the result that appropriate correction intervals (Δt_{K}) can be output to sequencing electronics (5) on the basis of said time differences (Δt1_{L}, Δt2_{L}, Δt1_{R}, Δt2_{R}) in order to optimize the measurement accuracy.

2. Probe system according to Claim 1, **characterized in that** the probe head (1) is configured to be sensor-free with regard to optical waves.

3. Probe system according to Claim 1 or 2, **characterized in that** the at least one further signal (R2, R4, R5, R7) can be transmitted from the probe head (1) to the transmitter-receiver element (2, 2').

4. Probe system according to Claim 1 or 2, **characterized in that** the at least one further signal (R3, R6) can be transmitted from the transmitter-receiver element (2, 2') to the probe head (1).

5. Probe system according to any of the preceding claims, **characterized in that** the item of touching information can be transmitted from the probe head (1) simultaneously via the first signal (L1) and the additional signal (R1) to the transmitter-receiver element (2, 2').

6. Probe system according to any of the preceding claims, **characterized in that** the probe system is configured such that the item of touching information can be output from the transmitter-receiver element (2) to sequencing electronics (5) as soon as either the first signal (L1) or the additional signal (R1) is prepared for output in the transmitter-receiver element (2).

7. Probe system according to any of the preceding claims, **characterized in that** the probe system is configured such that the item of touching information and an item of confirmation information can be output from the transmitter-receiver element (2, 2') to sequencing electronics (5).

8. Probe system according to any of Claims 1 to 5, **characterized in that** the probe system is configured such that the item of touching information can be output from the transmitter-receiver element (2') to sequencing electronics (5) with a predefined time delay (D) .

9. Method for operating a probe system which has a probe head (1) and a transmitter-receiver element (2, 2'), wherein the probe head (1) comprises a stylus (1.2) and a sensor element (1.5), wherein a sensor signal (E1), which contains an item of touching information, is generated by the sensor element (1.5) by moving the stylus (1.2), wherein wireless information transfer is produced between said probe head and transmitter-receiver element, **characterized in that**
the item of touching information is transmitted from the probe head (1) to the transmitter-receiver element (2, 2') by a first signal (L1) the carrier wave of which is an optical wave, and an additional signal (R1) the carrier wave of which is a radio wave, and, in addition,
a further item of information is transmitted between the probe head (1) and the transmitter-receiver element (2, 2') by at least one further signal (R2-R7) the carrier wave of which is a radio wave, wherein
an electronic unit is arranged in the probe head (1) and/or in the transmitter-receiver element (2, 2'), by means of which electronic unit time differences (Δt1_{L}, Δt2_{L}, Δt1_{R}, Δt2_{R}) which are necessary for the electronic processing of the item of touching information in the probe head (1) and/or in the transmitter-receiver element (2, 2') are calculated, with the result that appropriate correction intervals (Δt_{K}) are output to sequencing electronics (5) on the basis of said time differences (Δt1_{L}, Δt2_{L}, Δt1_{R}, Δt2_{R}) in order to optimize the measurement accuracy.

10. Method according to Claim 9, **characterized in that** the at least one further signal (R2, R4, R5, R7) is transmitted from the probe head (1) to the transmitter-receiver element (2, 2').

11. Method according to Claim 9, **characterized in that** the at least one further signal (R3, R6) is transmitted from the transmitter-receiver element (2, 2') to the probe head (1).

12. Method according to Claim 9, **characterized in that** the item of touching information is transmitted from the probe head (1) simultaneously via the first signal (L1) and the additional signal (R1) to the transmitter-receiver element (2, 2').

13. Method according to Claim 9, 10, 11 or 12, **characterized in that** the item of sampling information is output from the transmitter-receiver element (2) to sequencing electronics (5) as soon as either the first signal (L1) or the additional signal (R1) is prepared for output in the transmitter-receiver element (2).

14. Method according to Claim 9, 10, 11, 12 or 13, **characterized in that** the item of sampling information and an item of confirmation information are output from the transmitter-receiver element (2, 2') to sequencing electronics (5).

15. Method according to any of Claims 9 to 14, **characterized in that** the item of sampling information is output from the transmitter-receiver element (2') to sequencing electronics (5') with a predefined time delay (D).

## Revendications

1. Système de palpage comprenant
- une tête de palpage (1), laquelle possède une broche de palpage (1.2) et un élément de détection (1.5), un signal de détection (E1) pouvant être généré en touchant la broche de palpage (1.2) avec l'élément de détection (1.5), lequel contient une information de palpage, et
- un élément d'émission/réception (2, 2'),
la tête de palpage (1) et l'élément d'émission/réception (2, 2') étant configurés de telle sorte qu'une transmission d'informations sans fil peut être établie entre ceux-ci, **caractérisé en ce que** l'information de palpage peut être transmise de la tête de palpage (1) à l'élément d'émission/réception (2, 2') par un premier signal (L1) dont l'onde porteuse est une onde lumineuse et un signal supplémentaire (R1) dont l'onde porteuse est une onde radioélectrique, et en plus de cela des informations supplémentaires peuvent être transmises entre la tête de palpage (1) et l'élément d'émission/réception (2, 2') par au moins un signal supplémentaire (R2 - R7) dont l'onde porteuse est une onde radioélectrique,
une unité électronique étant disposée dans la tête de palpage (1) et/ou dans l'élément d'émission/réception (2, 2'), par le biais de laquelle peuvent être déterminées les différences de temps (Δt1_{L}, Δt2_{L}, Δt1_{R}, Δt2_{R}) nécessaires pour le traitement électronique de l'information de palpage dans la tête de palpage (1) et/ou dans l'élément d'émission/réception (2, 2'), de sorte que des intervalles de temps de correction (Δt_{K}) correspondants peuvent être délivrés à une électronique en aval (5) en vue d'optimiser la précision de mesure en se basant sur ces différences de temps (Δt1_{L}, Δt2_{L}, ΔT1_{R}, Δt2_{R}).

2. Système de palpage selon la revendication 1, **caractérisé en ce que** la tête de palpage (1) est configurée sans capteur pour ce qui concerne les ondes lumineuses.

3. Système de palpage selon la revendication 1 ou 2, **caractérisé en ce qu'**au moins un signal supplémentaire (R2, R4, R5, R7) peut être transmis de la tête de palpage (1) à l'élément d'émission/réception (2, 2').

4. Système de palpage selon la revendication 1 ou 2, **caractérisé en ce qu'**au moins un signal supplémentaire (R3, R6) peut être transmis de l'élément d'émission/réception (2, 2') à la tête de palpage (1).

5. Système de palpage selon l'une des revendications précédentes, **caractérisé en ce que** l'information de palpage peut être envoyée par la tête de palpage (1) simultanément par le premier signal (L1) et par le signal supplémentaire (R1) à l'élément d'émission/réception (2, 2').

6. Système de palpage selon l'une des revendications précédentes, **caractérisé en ce que** le système de palpage est configuré de telle sorte que l'information de palpage peut être délivrée par l'élément d'émission/réception (2) à une électronique en aval (5) dès que soit le premier signal (L1), soit le signal supplémentaire (R1) est préparé dans l'élément d'émission/réception (2) en vue d'être délivré.

7. Système de palpage selon l'une des revendications précédentes, **caractérisé en ce que** le système de palpage est configuré de telle sorte que l'information de palpage ainsi qu'une information de confirmation peuvent être délivrées par l'élément d'émission/réception (2, 2') à l'électronique en aval (5).

8. Système de palpage selon l'une des revendications 1 à 5, **caractérisé en ce que** le système de palpage est configuré de telle sorte que l'information de palpage peut être délivrée par l'élément d'émission/réception (2') à une électronique en aval (5') avec un décalage dans le temps (D) prédéfini.

9. Procédé pour faire fonctionner un système de palpage qui possède une tête de palpage (1) et un élément d'émission/réception (2, 2'), la tête de palpage (1) possédant une broche de palpage (1.2) et un élément de détection (1.5), un signal de détection (E1) étant généré en touchant la broche de palpage (1.2) avec l'élément de détection (1.5), lequel contient une information de palpage, une transmission d'informations sans fil étant établie entre ceux-ci, **caractérisé en ce que**
l'information de palpage est transmise de la tête de palpage (1) à l'élément d'émission/réception (2, 2') par un premier signal (L1) dont l'onde porteuse est une onde lumineuse et un signal supplémentaire (R1) dont l'onde porteuse est une onde radioélectrique, et en plus de cela
des informations supplémentaires sont transmises entre la tête de palpage (1) et l'élément d'émission/réception (2, 2') par au moins un signal supplémentaire (R2 - R7) dont l'onde porteuse est une onde radioélectrique,
une unité électronique étant disposée dans la tête de palpage (1) et/ou dans l'élément d'émission/réception (2, 2'), par le biais de laquelle peuvent être déterminées les différences de temps (Δt1_{L}, Δt2_{L}, Δt1_{R}, Δt2_{R}) nécessaires pour le traitement électronique de l'information de palpage dans la tête de palpage (1) et/ou dans l'élément d'émission/réception (2, 2'), de sorte que des intervalles de temps de correction (Δt_{K}) correspondants peuvent être délivrés à une électronique en aval (5) en vue d'optimiser la précision de mesure en se basant sur ces différences de temps (Δt1_{L}, Δt2_{L}, Δt1_{R}, Δt2_{R}).

10. Procédé selon la revendication 9, **caractérisé en ce qu'**au moins un signal supplémentaire (R2, R4, R5, R7) est transmis de la tête de palpage (1) à l'élément d'émission/réception (2, 2').

11. Procédé selon la revendication 9, **caractérisé en ce qu'**au moins un signal supplémentaire (R3, R6) est transmis de l'élément d'émission/réception (2, 2') à la tête de palpage (1).

12. Procédé selon la revendication 9, **caractérisé en ce que** l'information de palpage est envoyée par la tête de palpage (1) simultanément par le premier signal (L1) et par le signal supplémentaire (R1) à l'élément d'émission/réception (2, 2').

13. Procédé selon la revendication 9, 10, 11 ou 12, **caractérisé en ce que** l'information de palpage est délivrée par l'élément d'émission/réception (2) à l'électronique en aval (5) dès que soit le premier signal (L1), soit le signal supplémentaire (R1) est préparé dans l'élément d'émission/réception (2) en vue d'être délivré.

14. Procédé selon la revendication 9, 10, 11, 12 ou 13, **caractérisé en ce que** l'information de palpage ainsi qu'une information de confirmation sont délivrées par l'élément d'émission/réception (2, 2') à l'électronique en aval (5).

15. Procédé selon l'une des revendications 9 à 14, **caractérisé en ce que** l'information de palpage est délivrée par l'élément d'émission/réception (2') à une électronique en aval (5') avec un décalage dans le temps (D) prédéfini.
